# EUROPÄISCHE PATENTSCHRIFT

(11) **EP 0 780 402 B1**
(45) Veröffentlichungstag und Bekanntmachung des Hinweises auf die Patenterteilung: **23.04.2003**
(21) Anmeldenummer: 96120354.4
(22) Anmeldetag: 18.12.1996
(51) Int. Cl.: C08F 4/642, C08F 10/00

(54) **Geträgertes Katalysatorensystem, Verfahren zu seiner Herstellung und seine Verwendung zur Polymerisation von Olefinen**
Supported catalyst system, process for production of the same and the use thereof for the polymerization of olefins
Système de catalyseur à support, procédé pour sa préparation et son utilisation dans la polymérisation des oléfines

(30) Priorität: 22.12.1995 DE 19548288
(43) Veröffentlichungstag der Anmeldung: 25.06.1997
(73) Patentinhaber: Basell Polyolefine GmbH, 67056 Ludwigshafen (DE)
(72) Erfinder: Fraaije, Volker, Dr., 60325 Frankfurt (DE); Bachmann, Bernd, Dr., 65817 Eppstein (DE); Winter, Andreas, Dr., 61479 Glashütten (DE)

## Beschreibung

Geträgertes Katalysatorsystem, Verfahren zu seiner Herstellung und seine Verwendung zur Polymerisation von Olefinen.

Die vorliegende Erfindung betrifft ein geträgertes Katalysatorsystem mit hoher Aktivität und ein wirtschaftliches und umweltfreundliches Verfahren zur Herstellung des Katalysatorsystems sowie die Verwendung des Katalysatorsystems für die Polymerisation.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind beschrieben. Diese Katalysatoren liefern bei hoher Aktivität Homo- und Copolymere mit enger Molmassenverteilung.

Bei löslichen (homogenen) Metallocen-/Methylaluminoxan-Katalysatorsysteme in Verfahren, bei denen das gebildete Polymer als Feststoff anfällt, bilden sich häufig starke Beläge an Reaktorwänden und Rührer aus. Diese Beläge entstehen durch Agglomeration (Polymer Commun. (1991) 32, 58) der Polymerpartikel, wenn das Metallocen, oder Aluminoxan, oder beide gelöst im Suspensionsmedium vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.

Um das zu verhindern, ist es vorteilhaft, Metallocene in geträgerter Form einzusetzen.

Aus WO-A 94/28034 ist ein geträgertes Katalysatorsystem bekannt, wobei eine bei Raumtemperatur voraktivierte Lösung aus Metallocen und dem Cokatalysator Methylaluminoxan (MAO) auf ein poröses Trägermaterial (bevorzugt Silicagel) aufgebracht wird. Die Dauer der Vorreaktion zwischen MAO und Metallocen beträgt zwischen 1 und 60 Minuten, bevorzugt 10 Minuten.

Aus EP-A 0 518 092 ist ein geträgertes Katalysatorsystem bekannt, bei dem die voraktivierte Metallocen-MAO-Lösung auf poröse Polymere als Trägermaterialien aufgebracht wird. Die Dauer der Voraktivierung beträgt 1 bis 120 Minuten, vorzugsweise 10 bis 100 Minuten. Die Voraktivierung findet bei Temperaturen zwischen 0 und 50 °C statt.

Die beschriebenen Katalysatorsysteme haben eine niedrige Produktivität bezogen auf das geträgerte System in kg Polymer pro g Kontakt, im Vergleich zu klassischen Ziegler-Natta-Systemen.

Die beschriebenen Katalysatorsysteme haben darüberhinaus hohe Katalysatorkosten, die im wesentlichen dadurch verursacht werden, daß die teure Cokatalysator-Komponente Methylaluminoxan im Überschuß verwendet werden muß.

Die Aufgabe der vorliegenden Erfindung liegt darin, ein geträgertes Katalysatorsystem mit hoher Aktivität und ein wirtschaftliches und umweltfreundliches Verfahren zur Herstellung des Katalysatorsystems bereitzustellen.

Die der vorliegenden Erfindung zugrundeliegende Aufgabe wird durch ein geträgertes Katalysatorsystem mit hoher Aktivität gelöst, das erhältlich ist in dem
a) mindestens eine spezielle Metallocenkomponente in mindestens einem Lösungsmittel mit mindestens einer Cokatalysatorkomponente in Kontakt gebracht wird,
b) das lösliche Produkt zum Trägermaterial gegeben gegeben wird,
c) das Lösungsmittel entfernt wird,
wobei die Voraktivierungszeit 5 bis 20 h beträgt.

Der Vorteil des erfindungsgemäßen Katalysatorsystems liegt in einer deutlichen Steigerung der Aktivität und der Produktivität bei gleicher Zusammensetzung des Katalysatorsystems, wobei insbesondere das Verhältnis Cokatalysator zu Metallocen nicht verändert wird.

Eine bevorzugte Ausführungsform der Erfindung ist ein geträgertes Katalysatorsystem, wobei
d) das geträgerte Katalysatorsystem isoliert und
e) mit mindestens einem olefinischen Monomeren vorpolymerisiert wird.

Als Metallocenkomponente des erfindungsgemäßen Katalysatorsystems dienende Metallocene können gleiche oder verschiedene Liganden aufweisen.
Sie sind Metallocene der Gruppe IVb des Periodensystems der Elemente, wie Titan, Zirkonium oder Hafnium. Besonders bevorzugt sind Zirkonocene, die Indenyl- und Tetrahydroindenylderivate als Liganden tragen.

Die erfindungsgemäß eingesetzten Metallocene weisen die nachstehende Formel (I) auf, 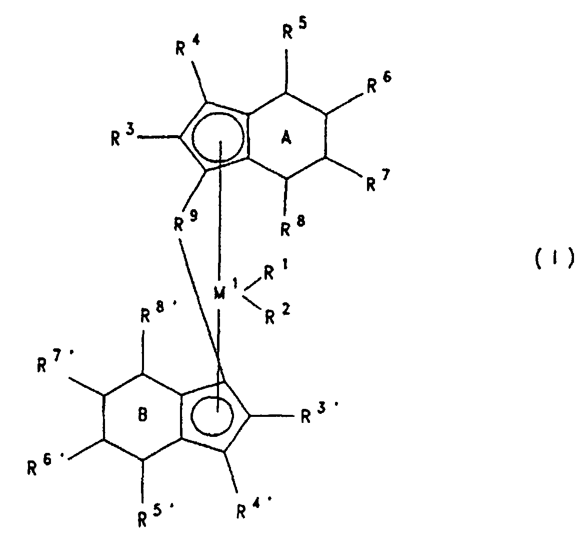 worin
M¹ ein Metall der Gruppe IVb des Periodensystems der Elemente ist,
R¹ und R² gleich oder verschieden sind und ein Wasserstoffatom, eine C₁-C₁₀-Alkylgruppe, eine C₁-C₁₀-Alkoxygruppe, eine C₆-C₂₀-Arylgruppe, eine C₆-C₁₀-Aryloxygruppe, eine C₂-C₁₀-Alkenylgruppe, eine OH-Gruppe, eine NR¹²₂-Gruppe, wobei R¹² eine C₁ bis C₂ Alkylgruppe oder C₆ bis C₁₄-Arylgruppe ist, oder ein Halogenatom bedeuten,
R³ bis R⁸ und R^{3'} bis R^{8'} gleich oder verschieden sind und ein Wasserstoffatom eine C₁-C₄₀-Kohlenwasserstoffgruppe, die linear, cyclisch oder verzweigt sein kann, z.B. eine C₁-C₁₀-Alkylgruppe, C₂-C₁₀-Alkenylgruppe, C₆-C₂₀-Arylgruppe, eine C₇-C₄₀-Arylalkylgruppe, eine C₇-C₄₀-Alkylarylgruppe oder eine C₈-C₄₀-Arylalkenylgruppe, bedeuten, oder benachbarte Reste R⁴ bis R⁸ und/oder R^{4'} bis R^{8'} mit den sie verbindenden Atomen ein Ringsystem bilden,
R⁹ eine Verbrückung bedeutet, bevorzugt 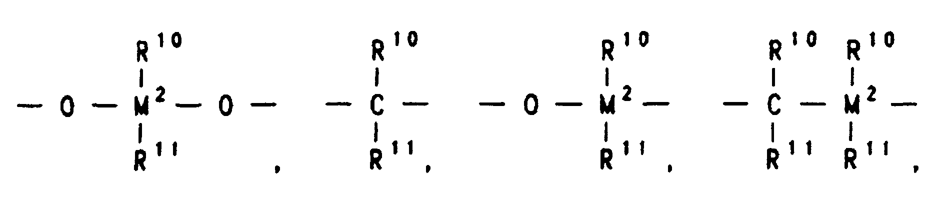 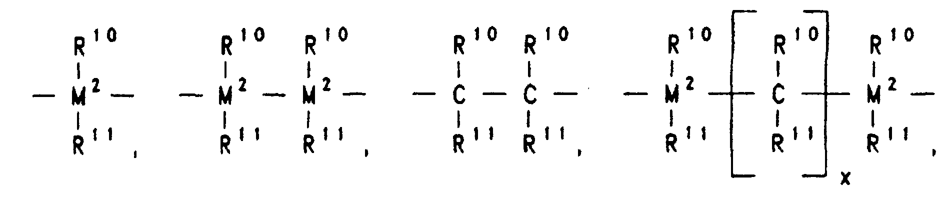 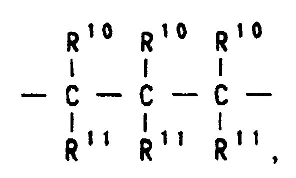 〉BR¹⁰, 〉AlR¹⁰, -Ge-, -O-, -S-, 〉SO, 〉SO₂, 〉NR¹⁰, 〉CO, 〉PR¹⁰ oder 〉R(O)R¹⁰,
wobei R¹⁰ und R¹¹ gleich oder verschieden sind und ein Wasserstoffatom, ein Halogenatom oder eine C₁-C₄₀-kohlenstoffhaltige Gruppe ist wie eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe oder R¹⁰ und R¹¹ jeweils mit den sie verbindenden Atomen einen oder mehrere Ringe bilden und x eine ganze Zahl von Null bis 18 ist,
M² Silizium, Germanium oder Zinn ist, und die Ringe A und B gleich oder verschieden, gesättigt oder ungesättigt sind.
R⁹ kann auch zwei Einheiten der Formel I miteinander verknüpfen.

In Formel I gilt besonders bevorzugt, daß
M¹ Zirkonium oder Hafnium ist,
R¹ und R² gleich sind und für Methyl oder Chlor, insbesondere Chlor, stehen und R⁹ = M²R¹⁰R¹¹ ist, worin M² Silizium oder Germanium ist und R¹⁰ sowie R¹¹ eine C₁-C₂₀-Kohlenwasserstoffgruppe, wie C₁-C₁₀-Alkyl oder C₆-C₁₄-Aryl ist.

Die Indenyl- bzw. Tetrahydroindenylliganden der Metallocene der Formel I sind in 2-, 2,4-, 4,7-, 2,6-, 2,4,6-, 2,5,6-, 2,4,5,6- und 2,4,5,6,7-Stellung, insbesondere in 2,4-Stellung, substituiert. Bevorzugte Substituenten sind eine C₁-C₄-Alkylgruppe wie z. B. Methyl, Ethyl oder Isopropyl oder eine C₆-C₁₀-Arylgruppe wie Phenyl, Naphthyl oder Mesityl. Die 2-Stellung ist bevorzugt durch eine C₁-C₄-Alkylgruppe, wie z.B. Methyl oder Ethyl substituiert.

Wenn in 2,4 Stellung substituiert ist, so gilt, daß
R⁵ und R^{5'} bevorzugt gleich oder verschieden sind und eine C₆-C₁₀-Arylgruppe, eine C₇-C₁₀-Arylalkylgruppe, eine C₇-C₄₀-Alkylarylgruppe oder eine C₈-C₄₀-Arylalkenylgruppe bedeuten.
Für den Substitutionsort gilt dabei die folgende Nomenklatur:

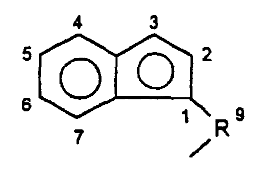

Von besonderer Bedeutung sind weiterhin Metallocene der Formel I, bei denen die Substituenten in 4- und 5-Stellung der Indenylreste (R⁵ und R⁶ sowie R^{5'} und R^{6'}) zusammen mit den sie verbindenden Atomen ein Ringsystem bilden, bevorzugt einen Sechsring. Dieses kondensierte Ringsystem kann ebenfalls durch Reste in der Bedeutung von R³ - R⁸ substituiert sein. Beispielhaft für solche Verbindungen I ist Dimethylsilandiylbis(2-methyl-4,5-benzoindenyl)zirkoniumdichlorid zu nennen.

Insbesondere bevorzugt sind solche Verbindungen der Formel I, die in 4-Stellung eine C₆-C₂₀-Arylgruppe und in 2-Stellung eine C₁-C₄-Alkylgruppe tragen. Beispielhaft für solche Verbindungen der Formel I ist Dimethylsilandiylbis(2-methyl-4-phenylindenyl)zirkoniumdichlorid.

Beispiele für die Metallocenkomponente des erfindungsgemäßen Katalysatorsystems sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-a-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Dimethylsilandiylbis(2-methyl-4-phenanthrylindenyl)zirkoniumdichlorid
Dimethylsilandiylbis(2-ethyl-4-phenanthrylindenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdichlorid
Methyl(phenyl)silandiylbis(2-methyl-4,5-(tetramethylbenzo)-indenyl)zirkoniumdichlorid
Methyl(phenyl)silandiylbis(2-methyl-4-a-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
Methyl(phenyl)silandiylbis(2-methyl-4-phenanthrylindenyl)zirkoniumdichlorid
Methyl(phenyl)silandiylbis(2-ethyl-4-phenanthrylindenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
7,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[Tris(pentafluorophenyl)(cyclopentadienyliden)borato](cyclopentadienyl)-1,2,3,4-tetraphenylbuta-1,3-dienylzirkonium
Dimethylsilandiyl-[tris(pentafluorophenyl)(2-methyl-4-phenylindenyliden)-borato](2-methyl-4-phenylindenyl)-1,2,3,4-tetraphenylbuta-1,3-dienylzirkonium
Dimethylsilandjyl-[tris(trifluoromethyl)(2-methylbenzindenyliden)borato](2-methylbenzindenyl-)-1,2,3,4-tetraphenylbuta-1,3-dienylzirkonium
Dimethylsilandiyl-[tris(pentafluorophenyl)(2-methyl-indenyliden)borato](2-methyl-indenyl)-1,2,3,4-tetraphenylbuta-1,3-dienylzirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-a-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiybis(2-methyl-4,5-benzo-indenyl)zirkoniumdimethyi
Dimethylsilandiylbis(2-methyl-4,6 diisopropyl-indenyl)zirkoniumdimethyl
Dimethylsilandiylbis(2-methyl-4,5 diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Dimethylsilandiylbis(2-methyl-4-phenanthrylindenyl)zirkoniumdimethyl
Dimethylsilandiylbis(2-ethyl-4-phenanthrylindenyl)zirkoniumdimethyl
Methyl(phenyl)silandiylbis(2-methyl-4-phenyl-indenyl)zirkoniumdimethyl
Methyl(phenyl)silandiylbis(2-methyl-4,6 diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)-indenyl)zirkoniumdimethyl
Methyl(phenyl)silandiylbis(2-methyl-4,5-(tetramethylbenzo)-indenyl)-zirkoniumdimethyl
Methyl(phenyl)silandiylbis(2-methyl-4-a-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
Methyl(phenyl)silandiylbis(2-methyl-4-phenanthrylindenyl)zirkoniumdimethyl
Methyl(phenyl)silandiylbis(2-ethyl-4-phenanthrylindenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6 diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,2-Ethandiylbis(2-methyl-indenyl)zirkoniumdimethyl
1,4-Butandiylbis(2-methyl-indenyl)zirkoniumdimethyl

Besonders bevorzugt sind:
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-phenyl-indenyl)zirkoniumdichlorid
Dimethylsilandiylbis(2-methyl-4-a-acenaphth-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6diisopropyl-indenyl)zirkoniumdichlorid

Dimethylsilandiylbis(2-methyl-4-phenanthrylindenyl)zirkoniumdichlorid
Dimethylsilandiylbis(2-ethyl-4-phenanthrylindenyl)zirkoniumdichlorid
Methyl(phenyl)silandiylbis(2-methyl-4-phenanthrylindenyl)zirkoniumdichlorid
Methyl(phenyl)silandiylbis(2-ethyl-4-phenanthrylindenyl)zirkoniumdichlorid

Herstellungsverfahren für Metallocene der Formel I sind z.B. in Journal of Organometallic Chem. 288 (1985) 63 - 67 und den dort zitierten Dokumenten beschrieben.

Das erfindungsgemäße Katalysatorsystem enthält zusätzlich mindestens einen Cokatalysator.

Die Cokatalysatorkomponente, die erfindungsgemäß im Katalysatorsystem enthalten ist, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel II

(R AlO)ₙ (II)

verwendet. Aluminoxane können z.B. cyclisch wie in Formel III 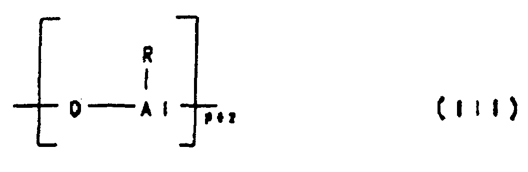 oder linear wie in Formel IV 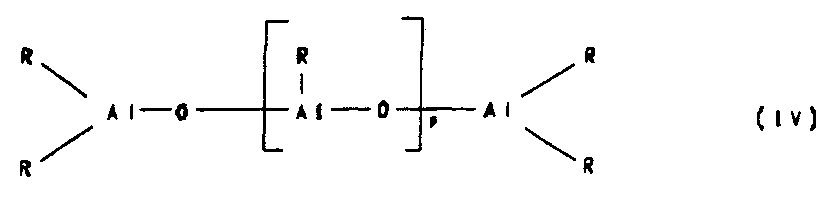 oder vom Cluster-Typ wie in Formel V sein, wie sie in neuerer Literatur beschrieben werden; vgl. JACS 117 (1995), 6465-74, Organometallics 13 (1994), 2957-2969.

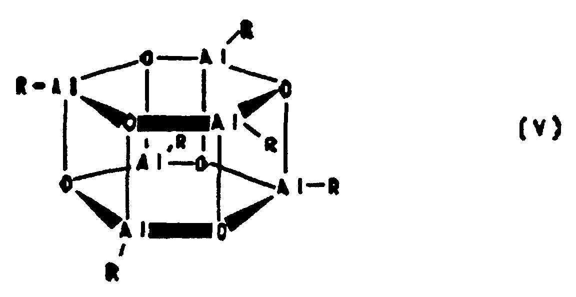

Die Reste R in den Formeln (II), (III), (IV) und (V) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R werden entsprechend der gewünschten Zusammensetzung und Reaktivität zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl,
3,5-Difluorophenyl, Pentachlorophenyl, Pentafluorophenyl, 3,4,5 Trifluorophenyl und 3,5 Di(trifluoromethyl)phenyl.

Besonders bevorzugt sind bororganische Verbindungen.
Beispiele für Lewis-Säuren sind Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻. Als kationisches Gegenion werden Lewis-Basen wie z.B. Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenyiphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N, N-Diethylaniliniumtetra(phenyl)borat,
N,N-Dimethylaniliniumtetrakis(pentafluorophenyl)borate,
N, N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder N,N-Dimethylaniliniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran- Verbindungen wie z.B. 7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltat(III),
Tri(butyl)ammoniumbis(undecahydrid-7,8-dicarbaundecaborat)ferrat(III)
von Bedeutung.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxidischen Trägern eingesetzt werden können, sind z.B. MgO, ZrO₂, TiO₂ oder B₂O₃ ,um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 m²/g, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicnt der Fall, wie bei dem Einsatz von Silicagel als Trägermaterial, ist eine Dehydratisierung oder Trocknung empfehlenswert. Der Gewichtsverlust beim Glühen (LOI = Loss on ignition) sollte 1 % oder weniger betragen. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauem sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan und metallorganische Verbindung von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln, wie sie bereits zuvor beschrieben worden sind, gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems wird mindestens eine der oben beschriebenen Metallocen-Komponenten in einem geeigneten Lösemittel mit der Cokatalysatorkomponente in Kontakt gebracht, um ein lösliches Reaktionsprodukt zu erhalten.

Das lösliche Reaktionsprodukt wird dann zum dehydratisierten oder inertisierten Trägermaterial gegeben, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:
a) Herstellung einer voraktivierten Metallocen/Cokatalysator-Mischung in einem geeigneten Lösemittel, wobei die Metallocen-Komponente eine der zuvor beschriebenen Strukturen besitzt,
b) Aufbringen der voraktivierten Metallocen/Cokatalysatorlösung auf einen porösen, im allgemeinen anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der voraktivierten Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponente in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Es können auch halogenierte Kohlenwasserstoffe wie Methylenchlorid oder Aromaten wie Fluorbenzol oder o-Dichlorbenzol eingesetzt werden. Ganz besonders bevorzugt ist Toluol.

Die bei der Präparation des geträgerten Katalysatorsystems eingesetzten Mengen an Aluminoxans und Metallocen können über einen weiten Bereich variiert werden. Bevorzugt wird ein molares Verhältnis von Aluminium zum Übergangsmetall im Metallocen von 10: 1 bis 1000 : 1 eingestellt, ganz besonders bevorzugt ein Verhältnis von 50 : 1 bis 500 : 1.
Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.

In EP-A 0302424 wird die Voraktivierung von Metallocenen für deren Verwendung zur Polymerisation in ungeträgerter Form beschrieben. Die Voraktivierungszeit beträgt 5 Minuten bis 100 Stunden, vorzugsweise 5 bis 60, insbesondere 10 bis 20 Minuten. Eine deutlich längere Voraktivierung ist möglich, sie wirkt sich normalerweise jedoch weder aktivitätssteigemd nocht aktivitätsmindemd aus, kann jedoch zu Lagerzwecken durchaus sinnvoll sein. Die Voraktivierung wird bei einer Temperatur von -78 bis 100 °C, vorzugsweise 0 bis 70 °C durchgeführt.

Überraschenderweise wurde nun gefunden, daß im Fall sterisch anspruchsvoller Metallocene, wie z.B. rac-Dimethylsilandiylbis(2-methyl-4-phenylindenyl)zirkoniumdichlorid eine deutlich längere Voraktivierungszeit zu einer wesentlichen Aktivitätssteigerung führt. Erfindungsgemäß beträgt die Voraktivierungszeit 5 bis 20 h.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C. Auch bei höheren Temperaturen liegt die bevorzugte Voraktivierungsdauer bei den erfindungsgemäß bevorzugten Metallocenen deutlich über der aus dem Stand der Technik bekannten Voraktivierungsdauer.

Die voraktivierte Lösung wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Kieselgel als Pulver eingesetzt. Die Reihenfolge der Zugabe ist dabei beliebig. Die voraktivierte Metallocen-Cokatalysator-Lösung kann zum vorgelegten Trägermaterial dosiert, oder aber das Trägermaterial in die vorgelegte Lösung eingetragen werden.

Das Volumen der voraktivierten Lösung kann 100 % des Gesamtporenvolumens des eingesetzten Trägermaterials überschreiten oder aber bis zu 100 % des Gesamtporenvolumens betragen.
Die Temperatur, bei der die voraktivierte Lösung mit dem Trägermaterial in Kontakt gebracht wird, kann im Bereich zwischen 0 und 100 °C variieren. Niedrigere oder höhere Temperaturen sind aber auch möglich. Nach der Vereinigung von Trägermaterial und Lösung wird die Mischung noch etwa 1 Minute bis 1 Stunde, bevorzugt 5 Minuten bei dieser Temperatur gehalten.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist.
Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel I. Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden in dem erfindungsgemäßen Verfahren Ethen oder Propen homopolymerisiert, oder Ethen mit einem oder mehreren 1-Olefinen mit 3 bis 20 C-Atomen, wie Propen, und/oder einem oder mehreren Dienen mit 4 bis 20 C-Atomen, wie 1,4-Butadien, Norbornadien oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von - 60 bis 300 °C , bevorzugt 50 bis 200 °C, durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit einem Aluminiumalkyl oder einem Aluminoxan eingesetzt werden. Die lösliche Aluminiumkomponente wird dem Monomeren zugesetzt und dient zur Reinigung des Monomeren von Substanzen, die die Katalysatoraktivität beeinträchtigen können. Die Menge der zugesetzten Aluminiumkomponente hängt von der Qualität der eingesetzten Monomere ab.

Als Molmassenregler und/oder zur Steigerung der Aktivität wird, falls erforderlich, Wasserstoff zugegeben.

Die Erfindung wird anhand der nachstehend aufgeführten Beispiele näher erläutert.

### Beispiele

### Allgemeine Angaben

Die Herstellung und Handhabung der organometallischen Verbindungen erfolgte unter Ausschluß von Luft und Feuchtigkeit unter Argon-Schutz (Schlenk-Technik). Alle benötigten Lösemittel wurden vor Gebrauch durch mehrstündiges Sieden über einem geeigneten Trockenmittel und anschließende Destillation unter Argon absolutiert.

Die eingesetzten Metallocene wurden mit ¹H-NMR, ¹³C-NMR und IR-Spektroskopie charakterisiert.

Es bedeuten
- PP =: Polypropylen
- MC =: Metallocen
- Kat =: geträgertes Katalysatorsystem
- h =: Stunde
- VZ =: Viskositätszahl in cm³/g
- M_{w} =: Molmassengewichtsmittel in g/mol
- M_{w}/Mₙ =: Molmassenverteilung, ermittelt durch Gelpermeationschromatographie
- SD =: Schüttdichte in g/dm³ und
- Smp. =: Schmelzpunkt in °C, ermittelt durch Differential Scanning Calorimetry (DSC, 2. Heizen)

### Beispiel 1

### Darstellung des geträgerten Katalysatorsystems

444 mg (0.71 mmol) rac-Dimethylsilandiylbis(2-methyl-4-phenylindenyl)zirkoniumdichlorid wurden bei Raumtemperatur in 35,5 ml (128 mmol Al) 30 %iger toluolischer Methylaluminoxan-Lösung¹⁾ gelöst. Zur Voraktivierung wurde der Ansatz lichtgeschützt bei 25 °C 18 h stehengelassen. Die so bereitete Metallocen-MAO-Lösung wurde anschließend mit 86.9 ml Toluol auf ein Gesamtvolumen von 122.4 ml verdünnt. In diese Lösung wurden 30.6 g SiO₂²⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 39.5 g eines frei fließenden, rosafarbenen Pulvers erhalten, das laut Elementaranalyse 0.15 Gew% Zr und 8.0 Gew% Al enthielt.

### Polymerisation

Ein trockener 16 dm³ -Reaktor, der zunächst mit Stickstoff und anschließend mit Propen gespült worden war, wurde mit 10 L flussigem Propen gefüllt. Als Scavenger wurden 8 ml 20 %iger Triethylaluminium-Lösung in Varsol™ (Witco) zugesetzt und der Ansatz 15 min bei 30 °C gerührt. Anschließend wurde eine Suspension von 1.2 g des geträgerten Metallocen-Katalysators in 20 ml eines entaromatisierten Benzinschnitt mit dem Siedepunktbereich von 100 °C bis 120 °C in den Reaktor gegeben, auf die Polymerisationstemperatur von 65 °C aufgeheizt und das Polymerisationssystem 1 h bei 65 °C gehalten. Die Polymerisation wurde durch Zusatz von 20 ml Isopropanol gestoppt, das überschüssige Monomer abgegast und das erhaltene Polymer im Vakuum getrocknet. Es resultierten 2.4 kg Polypropylen-Pulver.

Die Katalysatoraktivität betrug 193 kg PP / (g MC x h) oder 2 kg PP /(g Kat x h)

Das dargestellte isotaktische Polypropylen wies die folgenden Eigenschaften auf: Smp. 147 °C ; M_{w} = 901 000 g/mol, M_{w}/Mₙ = 2,3, VZ = 603 ml/g, SD = 370 g/dm³

### Vergleichsbeispiel 1

### Darstellung des geträgerten Katalysatorsystems

460 mg (0.73 mmol) rac-Dimethylsilandiylbis(2-methyl-4-phenylindenyl)zirkoniumdichlorid wurden bei Raumtemperatur in 36,8 ml (133 mmol Al) 30 %iger toluolischer Methylaluminoxan-Lösung¹⁾ gelöst. Der Ansatz wurde mit 93 ml Toluol verdünnt und 10 min bei 25 °C gerührt. In diese Lösung wurden 33,2 g SiO₂²⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 44 g eines frei fließenden, rosafarbenen Pulvers erhalten, das laut Elementaranalyse 0.16 Gew% Zr und 8.0 Gew% Al enthielt.
¹⁾ Albemarle Corporation, Baton Rouge, Louisiana, USA
²⁾ Silica Typ MS 948 , W.R. Grace, Davison Chemical Devision, Baltimore, Maryland, USA,

### Polymerisation

Die Polymerisation wurde analog zu Beispiel 1 durchgeführt. Es resultierten 1.4 kg Polypropylen-Pulver.

Die Katalysatoraktivität betrug 109 kg PP / (g MC x h) oder 1,2 kg PP /(g Kat x h)

Das dargestellte isotaktische Polypropylen wies die folgenden Eigenschaften aut: Smp. 146 °C; M_{w} = 1 010 000 g/mol, M_{w}/Mₙ = 2,3, VZ = 643 ml/g, SD = 380 g/dm³
Porenvolumen 1,6 ml/g, calciniert bei 800 °C

### Beispiel 2

### Darstellung des geträgerten Katalysatorsystems

198 mg (0.31 mmol) rac-Dimethylsilandiylbis(2-methyl-4-phenylindenyl)zirkoniumdichlorid wurden bei Raumtemperatur in 17,4 ml (68 mmol Al) 30 %iger toluolischer Methylaluminoxan-Lösung³⁾ gelöst. Zur Voraktivierung wurde der Ansatz lichtgeschützt bei 25 °C 18 h stehengelassen. Die Metallocen-MAO-Lösung wurde anschließend mit 44,6 ml Toluol auf ein Gesamtvolumen von 62 ml verdünnt. In diese Lösung wurden 15,5 g SiO₂⁴⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 20,2 g eines frei fließenden, rosafarbenen Pulvers erhalten, das laut Elementaranalyse 0.12 Gew% Zr und 7,9 Gew% Al enthielt.

### Polymerisation

Die Polymerisation wurde unter den gleichen Bedingungen, wie in Beispiel 1, aber mit 1,6 g Kontakt und 8 ml 20 % Triethylaluminium in Varsol™ (Witco) durchgeführt. Es resultierten 1,7 kg Polypropylen-Pulver.

Die Katalysatoraktivität betrug 128 kg PP / (g MC x h) oder 1,06 kg PP /(g Kat x h)

Das dargestellte isotaktische Polypropylen wies die folgenden Eigenschaften auf: Smp. 148 °C; M_{w} = 1 300 000 g/mol, M_{w}/Mₙ = 2,8, VZ = 762 ml/g, SD = 290 g/dm³

### Vergleichsbeispiel 2

### Darstellung des geträgerten Katalysatorsystems

203 mg (0.32 mmol) rac-Dimethylsilandiylbis(2-methyl-4-phenylindenyl)zirkoniumdichlorid wurden bei Raumtemperatur in 17,8 ml (70 mmol Al) 30 %iger toluolischer Methylaluminoxan-Lösung³⁾ gelöst. Der Ansatz wurde mit 45 ml Toluol verdünnt und 10 min bei Raumtemperatur gerührt. In diese Lösung wurden 15,7 g SiO₂⁴⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 20,0 g eines frei fließenden, rosafarbenen Pulvers erhalten, das laut Elementaranalyse 0.12 Gew% Zr und 8,0 Gew% Al enthielt.
³⁾ Witco GmbH, Bergkamen, Bundesrepublik Deutschland
⁴⁾ Silica Typ MS 948, W.R. Grace, Davison Chemical Devision, Baltimore, Maryland, USA,

### Polymerisation

Die Polymerisation wurde unter den gleichen Bedingungen, wie in Beispiel 1, aber mit 2,2 g Kontakt und 8 ml 20 % Triethylaluminium in Varsol™ (Witco) durchgeführt. Es resultierten 0,8 kg Polypropylen-Pulver.

Die Katalysatoraktivität betrug 60 kg PP / (g MC x h) oder 0,5/ kg PP /(g Kat x h)

Das dargestellte isotaktische Polypropylen wies die folgenden Eigenschaften auf: Smp. 148 °C ; M_{w} = 1 300 000 g/mol, M_{w}/Mₙ = 3,0, VZ = 698 ml/g, SD =310 g/dm³
Porenvolumen 1,6 ml/g, calciniert bei 600 °C

### Beispiel 3

### Darstellung des geträgerten Katalysatorsystems

23 mg (0,040 mmol) rac-Dimethylsilandiylbis(2-Me-4,5-benzoindenyl)zirkoniumdichlorid wurden in 1,8 ml (7,1 mmol Al) 30 %iger toluolischer Methylaluminoxan-Lösung³⁾ gelöst und der Ansatz lichtgeschützt bei 25 °C 18 h stehengelassen. Anschließend wurde die so bereitete Metallocen-MAO-Lösung mit Toluol auf ein Gesamtvolumen von 4 mL verdünnt. In diese Lösung wurden dann 6,5 g PP-Pulver⁵⁾ langsam eingetragen. Durch kurzzeitiges Anlegen eines Vakuums (0,1 mbar) wurde das in den Poren des Trägers befindliche Gas entfernt und die Lösung vollständig aufgesogen. Nach weiteren 10 min intensiven Rührens erhielt man ein homogenes, feinteiliges und gut fließendes Pulver.
³⁾ Witco GmbH, Bergkamen, Bundesrepublik Deutschland
⁵⁾ Accurell® -PP (Siebfraktion < 200 µm) von der Fa. Akzo, durch Extraktion mit Toluol im Soxhlet-Extraktor unter Inertbedingungen von Verunreinigungen befreit, anschließend 5 h bei 25 °C und 2 x 10⁻⁴ mbar getrocknet und mit Argon gespült

### Polymerisation

Die Polymerisation wurde unter den gleichen Bedingungen, wie in Beispiel 1, aber mit der Gesamtmenge des Katalysatorpulvers aus Beispiel 3 und 10 ml 20 % Triisobutylaluminium in Varsol™ (Witco) durchgeführt. Es resultierten 2,5 kg Polypropylen-Pulver.

Die Katalysatoraktivität betrug 110 kg PP / (g MC x h)

Das dargestellte isotaktische Polypropylen wies die folgenden Eigenschaften auf: Smp. 146 °C ; M_{w} = 350 000 g/mol, M_{w}/Mₙ = 2,2, VZ = 250 ml/g, SD = 280 g/dm³

### Vergleichsbeispiel 3

### Darstellung des geträgerten Katalysatorsystems

23 mg (0,040 mmol) rac-Dimethylsilandiylbis(2-Me-4,5-benzoindenyl)zirkoniumdichlorid wurden in 1,8 ml (7,1 mmol Al) 30 %iger toluolischer Methylaluminoxan-Lösung³⁾ gelöst und mit Toluol auf ein Gesamtvolumen von 4 mL verdünnt. Dieser Ansatz wurde 10 min bei 25 °C gerührt. In die so vorbereitete Metallocen-MAO-Lösung wurden dann 6,5 g PP-Pulver⁵⁾ längsam eingetragen. Durch kurzzeitiges Anlegen eines Vakuums (0,1 mbar) wurde das in den Poren des Trägers befindliche Gas entfernt und die Lösung vollständig aufgesogen. Nach weiteren 10 min intensiven Rührens erhielt man ein homogenes, feinteiliges und gut fließendes Pulver.
³⁾ Witco GmbH, Bergkamen, Bundesrepublik Deutschland
⁵⁾ Accurell® -PP (Siebfraktion < 200 µm) von der Fa. Akzo, durch Extraktion mit Toluol im Soxhlet-Extraktor unter Inertbedingungen von Verunreinigungen befreit, anschließend 5 h bei 25 °C und 2 x 10⁻⁴ mbar getrocknet und mit Argon gespült

### Polymerisation

Die Polymerisation wurde unter den gleichen Bedingungen, wie in Beispiel 1, aber mit der Gesamtmenge des Katalysatorpulvers aus Vergleichsbeispiel 3 und 10 ml 20 % Triisobutylaluminium in Varsol™ (Witco) durchgeführt. Es resultierten 1,8 kg Polypropylen-Pulver.

Die Katalysatoraktivität betrug 78 kg PP / (g MC x h)

Das dargestellte isotaktische Polypropylen wies die folgenden Eigenschaften auf: Smp. 146 °C ; M_{w} = 330 000 g/mol, M_{w}/Mₙ = 2,3, VZ = 244 ml/g, SD = 290 g/dm³

### Beispiel 4

### Darstellung des geträgerten Katalysatorsystems

200 mg (0,32 mmol) rac-Dimethylsilandiylbis(2-methyl-4-phenylindenyl)zirkoniumdichlorid wurden bei Raumtemperatur in 17,6 ml (69 mmol Al) 30 %iger toluolischer Methylaluminoxan-Lösung³⁾ gelöst. Zur Voraktivierung wurde der Ansatz lichtgeschützt bei 25 °C 18 h stehengelassen. Die so bereitete Metallocen-MAO-Lösung wurde anschließend mit 103 ml Toluol auf ein Gesamtvolumen von 120,6 ml verdünnt. In diese Lösung wurden 16,1 g SiO₂⁶⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 21,1 g eines frei fließenden, rosafarbenen Pulvers erhalten, das laut Elementaranalyse 0,14 Gew% Zr und 8,6 Gew% Al enthielt.
Porenvolumen: 3 ml/g, calciniert bei 300 °C
⁶⁾ Typ MS 3030 hergestellt von der PQ Corporation, Valley Forge, Pennsylvania, USA,

### Polymerisation

Die Polymerisation wurde unter den gleichen Bedingungen, wie in Beispiel 1, aber mit 1,6 g Kontakt und 8 ml 20 % Triethylaluminium in Varsol™ (Witco) durchgeführt. Es resultierten 1,3 kg Polypropylen-Pulver.

Die Katalysatoraktivität betrug 83 kg PP / (g MC x h) oder 0,8 kg PP /(g Kat x h)

Das dargestellte isotaktische Polypropylen wies die folgenden Eigenschaften auf: Smp. 147 °C ; M_{w} = 910 000 g/mol, M_{w}/Mₙ = 2,3, VZ = 610 ml/g, SD = 380 g/dm³

### Vergleichsbeispiel 4

### Darstellung des geträgerten Katalysatorsystems

198 mg (0.31 mmol) rac-Dimethylsilandiylbis(2-methyl-4-phenylindenyl)zirkoniumdichlorid wurden bei Raumtemperatur in 17,6 ml (69 mmol Al) 30 %iger toluolischer Methylaluminoxan-Lösung³⁾ gelöst. Der Ansatz wurde mit 106 ml Toluol verdünnt und 10 min bei 25 °C gerührt. In diese Lösung wurden 16,5 g SiO₂⁶⁾ langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 21,3 g eines frei fließenden, rosafarbenen Pulvers erhalten, das laut Elementaranalyse 0,13 Gew% Zr und 8,7 Gew% Al enthielt.
³⁾ Witco GmbH, Bergkamen, Bundesrepublik Deutschland

### Polymerisation

Die Polymerisation wurde analog zu Beispiel 1, aber mit 1,6 g des Kontaktes aus Vergleichsbeispiel 4. Es resultierten 0,8 kg Polypropylen-Pulver.

Die Katalysatoraktivität betrug 56 kg PP / (g MC x h) oder C,5 kg PP /(g Kat x h)

Das dargestellte isotaktische Polypropylen wies die folgenden Eigenschaften auf: Smp. 147 °C ; M_{w} = 1 000 000 g/mol, M_{w}/Mₙ = 2,2, VZ = 640 ml/g, SD = 390 g/dm³

### Beispiel 5

### Darstellung des geträgerten Katalysatorsystems

109 mg (0,17 mmol) rac-Dimethylsilandiylbis(2-methyl-4-phenylindenyl)zirkoniumdichlorid wurden in 9,7 ml (38 mmol Al) 30 %iger toluolischer Methylaluminoxan-Lösung³⁾ gelöst und der Ansatz 5 h bei 60 °C gerührt. Anschließend wurde die Metallocen-MAO-Lösung auf 25 °C abgekühlt und mit 55,6 ml Toluol auf ein Gesamtvolumen von 65,3 mL verdünnt. In die so vorbereitete Lösung wurden langsam 8,7 g SiO₂⁷⁾ eingetragen. Das Verhältnis Volumen der Lösung zum Gesamtporenvolumen des Trägermaterials betrug 2,5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 12,8 g eines frei fließenden, rosafarbenen Pulvers erhalten, das laut Elementaranalyse 0,12 Gew% Zr und 8,0 Gew% Al enthielt.
Porenvolumen: 3 ml/g, calciniert bei 400 °C
³⁾ Witco GmbH, Bergkamen, Bundesrepublik Deutschland
⁷⁾ Typ MS 3030 hergestellt von der PQ Corporation, Valley Forge, Pennsylvania, USA,

### Polymerisation

Die Polymerisation wurde unter den gleichen Bedingungen, wie in Beispiel 1, aber mit 1,6 g des Kontaktes aus Beispiel 5 und 8 ml 20 % Triethylaluminium in Varsol™ (Witco) durchgeführt. Es resultierten 1,8 kg Polypropylen-Pulver.

### Die Katalysatoraktivität betrug 133 kg PP/(g MC x h) oder 1,1 kg PP/(g Kat x h)

Das dargestellte isotaktische Polypropylen wies die folgenden Eigenschaften auf:
Smp. 148 °C, M_{w} = 1 200 000 g/mol; M_{w}/Mₙ = 2,4 ; VZ = 680 ml/g, SD = 390 g/dm³

### Vergleichsbeispiel 5

### Darstellung des geträgerten Katalysatorsystems

123 mg (0,20 mmol) rac-Dimethylsilandiylbis(2-methyl-4-phenylindenyl)zirkoniumdichlorid wurden in 10,9 ml (43 mmol Al) 30 %iger toluolischer Methylaluminoxan-Lösung³⁾ gelöst und der Ansatz 5 h bei 25 °C gerührt. Anschließend wurde die Metallocen-MAO-Lösung mit 65 ml Toluol auf ein Gesamtvolumen von 75,9 ml verdünnt. In die so vorbereitete Lösung wurden 10,1 g SiO₂⁷⁾ langsam eingetragen. Das Verhältnis Volumen der Lösung zum Gesamtporenvolumen des Trägermaterials betrug 2,5. Nach beendeter Zugabe wurde der Ansatz weitere 5 min bei 25 °C gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 14,8 g eines frei fließenden, rosafarbenen Pulvers erhalten, das laut Elementaranalyse 0,12 Gew% Zr und 7,8 Gew% Al enthielt.
³⁾ Witco GmbH, Bergkamen, Bundesrepublik Deutschland
⁷⁾ Typ MS 3030 hergestellt von der PQ Corporation, Valley Forge, Pennsylvania, USA,

### Polymerisation

Die Polymerisation wurde analog zu Beispiel 1, aber mit 1,6 g des Kontaktes aus Vergleichsbeispiel 5 durchgeführt. Es resultierten 1,1 kg Polypropylen-Pulver.

Die Katalysatoraktivität betrug 85 kg PP / (g MC x h) oder 0,7 kg PP /(g Kat x h)

Das dargestellte isotaktische Polypropylen wies die folgenden Eigenschaften auf: Smp. 149 °C; M_{w} = 1 250 000 g/mol, M_{w}/Mₙ = 2,3 , VZ = 678 ml/g, SD = 380 g/dm³

Die in den Beispielen und Vergleichsbeispielen 1 bis 5 gemessenen charakteristischen Daten der jeweiligen Katalysatorsysteme und der erhaltenen Polymere sind zur besseren Übersicht in den nachstehend aufgeführten Tabellen 1 und 2 zusammengefaßt.

**Tabelle 1**

| Katalysatorsystem | | | | | | |
|---|---|---|---|---|---|---|
| **B+)/ V#)** | **Metallocen** | **Zeit** **[min]** | **Temp.** **[°C]** | **% Zr** | **% Al** | **Akt**^{**a)**} |
| B1 | I*) | 1080 | 25 | 0.15 | 8.0 | 193 |
| V1 | I*) | 10 | 25 | 0.16 | 8.0 | 109 |
| B2 | I*) | 1080 | 25 | 0.12 | 7.9 | 128 |
| V2 | I*) | 10 | 25 | 0.12 | 8.0 | 60 |
| B3 | II**) | 1080 | 25 | n.b. | n.b. | 110 |
| V3 | II**) | 10 | 25 | n.b. | n.b. | 78 |
| B4 | I*) | 1080 | 25 | 0.14 | 8.6 | 83 |
| V4 | I*) | 10 | 25 | 0.13 | 8.7 | 56 |
| B5 | I*) | 300 | 60 | 0.12 | 8.0 | 133 |
| V5 | I*) | 300 | 25 | 0.12 | 7.8 | 85 |

| | | | | | | |
|---|---|---|---|---|---|---|
| +) Beispiele | | | | | | |
| #) Vergleichsbeispiele | | | | | | |
| a) Katalysatoraktivität in kgPP/(gMCxh) | | | | | | |
| *) rac-Dimethylsilandiylbis(2-methyl-4-phenylindenyl)zirkoniumdichlorid | | | | | | |
| **) rac-Dimethylsilandiylbis(2-Me-4,5-benzoindenyl)zirkoniumdichlorid | | | | | | |

**Tabelle 2**

| Polymere | | | | | |
|---|---|---|---|---|---|
| **B**^{**+)**} **V**^{**#)**} | **Smp.** **[°C]** | **M**_{**w**} **[gmol]** | **M**_{**w**}**/M**_{**n**} | **VZ** **[mlg**^{**-1]**} | **SD** **[g/dm**^{**3]**} |
| B1 | 147 | 901000 | 2.3 | 603 | 370 |
| V1 | 146 | 1010000 | 2.3 | 643 | 380 |
| B2 | 148 | 1300000 | 2.8 | 762 | 290 |
| V2 | 148 | 1300000 | 3.0 | 698 | 310 |
| B3 | 146 | 350000 | 2.2 | 250 | 280 |
| V3 | 146 | 330000 | 2.3 | 244 | 290 |
| B4 | 147 | 910000 | 2.3 | 610 | 380 |
| V4 | 147 | 1000000 | 2.2 | 640 | 390 |
| B5 | 148 | 1200000 | 2.4 | 680 | 390 |
| V5 | 149 | 1250000 | 2.3 | 678 | 380 |

## Patentansprüche

1. Geträgertes Katalysatorsystem mit hoher Aktivität erhältlich in dem
a) mindestens eine Metallocenkomponente der Formel (I) 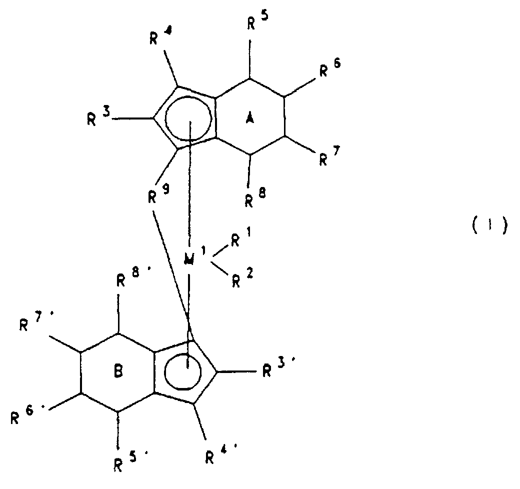 worin
M¹ein Metall der Gruppe IVb des Periodensystems der Elemente ist, R¹ und R² gleich oder verschieden sind und ein Wasserstoffatom, eine C₁-C₁₀-Alkylgruppe, eine C₁-C₁₀-Alkoxygruppe, eine C₆-C₂₀-Arylgruppe, eine C₆-C₁₀-Aryloxygruppe, eine C₂-C₁₀-Alkenylgruppe, eine OH-Gruppe, eine NR¹²₂-Gruppe, wobei R¹² eine C₁ bis C₂ Alkylgruppe oder C₆ bis C₁₄-Arylgruppe ist, oder ein Halogenatom bedeuten,
R³ bis R⁸ und R^{3'} bis R^{8'}gleich oder verschieden sind und ein Wasserstoffatom eine C₁-C₄₀-Kohlenwasserstoffgruppe, die linear, cyclisch oder verzweigt sein kann, z.B. eine C₁-C₁₀-Alkylgruppe, C₂-C₁₀-Alkenylgruppe, C₆-C₂₀-Arylgruppe, eine C₇-C₄₀-Arylalkylgruppe, eine C₇-C₄₀-Alkylarylgruppe oder eine C₈-C₄₀-Arylalkenylgruppe, bedeuten, oder benachbarte Reste R⁴ bis R⁸ und/oder R^{4'} bis R^{8'} mit den sie verbindenden Atomen ein Ringsystem bilden, R⁹ eine Verbrückung bedeutet, bevorzugt 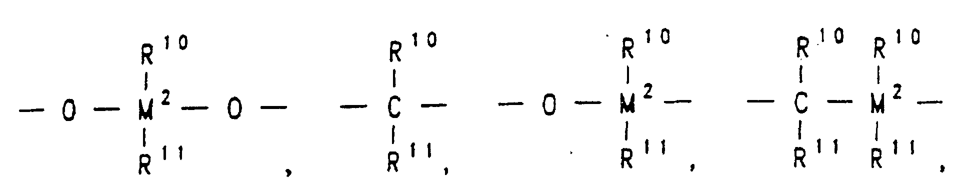 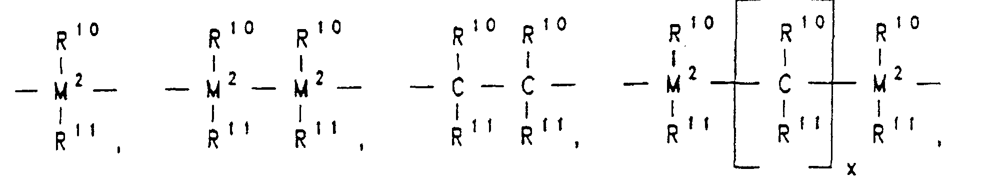 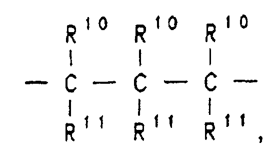 〉BR¹⁰, 〉AlR¹⁰, -Ge-, -O-, -S-, SO, 〉SO₂, 〉NR¹⁰, 〉CO, 〉PR¹⁰ oder 〉R(O)R¹⁰,
wobei
R¹⁰ und R¹¹ gleich oder verschieden sind und ein Wasserstoffatom, ein Halogenatom oder eine C₁₋C₄₀-kohlenstoffnaltige Gruppe ist oder R¹⁰ und R¹¹ jeweils mit den sie verbindenden Atomen einen oder mehrere Ringe bilden und x eine ganze Zahl von Null bis 18 ist,
M² Silizium, Germanium oder Zinn ist, und die Ringe A und B gleich oder verschieden, gesättigt oder ungesättigt sind,
R⁹ kann auch zwei Einheiten der Formel I miteinander verknüpfen,
und wobei die Metallocene der Formel I sterisch anspruchsvoll sind, dergestalt daß die Indenyl- bzw. Tetrahydroindenylliganden in 2-, 2,4-, 4,7-, 2,6-, 2,4,6-, 2,5,6-, 2,4,5,6-, und 2,4,5,6,7-Stellung substituiert sind, in mindestens einem Lösungsmittel mit mindestens einer Cokatalysatorkomponente in Kontakt gebracht wird,
b) das lösliche Produkt zum Trägermaterial gegeben gegeben wird,
c) das Lösungsmittel entfernt wird,
**dadurch gekennzeichnet, daß** die Voraktivierungszeit 5 bis 20 h beträgt.

2. Geträgertes Katalysatorsystem nach Anspruch 1, wobei
d) das geträgerte Katalysatorsystem isoliert und
e) mit mindestens einem olefinischen Monomeren vorpolymerisiert wird.

3. Geträgertes Katalysatorsystem nach einem oder mehreren der Ansprüche 1 bis 2, wobei die Cokatalysatorkomponente mindestens eine Verbindung vom Typ eines Aluminoxans oder einer Lewis-Säure oder einer ionischen Verbindung ist, die durch Reaktion mit einem Metallocen dieses in eine kationische Verbindung überführt.

4. Geträgertes Katalysatorsystem nach einem oder mehreren der Ansprüche 1 bis 3, wobei als Trägermaterial Kieselgel als Pulver verwendet wird.

5. Geträgertes Katalysatorsystem nach einem oder mehreren der Ansprüche 1 bis 4, wobei M¹ Zirkonium oder Hafnium ist.

6. Geträgertes Katalysatorsystem nach einem oder mehreren der Ansprüche 1 bis 5, wobei R¹ und R² gleich sind und Methyl oder Chlor, insbesondere Chlor, bedeuten und R⁹ = M²R¹⁰R¹¹ ist, worin M² Silizium oder Germanium ist und R¹⁰ sowie R¹¹ eine C₁-C₂₀-Kohlenwasserstoffgruppe, wie C₁-C₁₀-Alkyl oder C₆-C₁₄-Aryl bedeuten.

7. Verfahren zur Herstellung des geträgerten Katalysatorsystems mit hoher Aktivität nach einem oder mehreren der Ansprüche 1 bis 6, wobei
a) mindestens eine Metallocenkomponente (I) gemäß Anspruch 1 oder 5 in mindestens einem Lösungsmittel mit mindestens einer Cokatalysatorkomponente in Kontakt gebracht wird,
b) das lösliches Produkt zum Trägermaterial gegeben gegeben wird,
c) das Lösungsmittel entfernt wird,
**dadurch gekennzeichnet, daß** die Voraktivierungszeit 5 bis 20 h beträgt.

8. Verfahren zur Herstellung eines Polyolefins durch Polymerisation einer oder mehrerer Olefine in Gegenwart mindestens eines Katalysatorsystems gemäß einem oder mehreren der Ansprüche 1 bis 6.

9. Verfahren nach Anspruch 8, wobei mindestens ein Olefin mit der Formel Rₘ-CH=CH-Rₙ polymerisiert wird, worin Rₘ und Rₙ gleich oder verschieden sind und ein Wasserstoffatom oder einen kohlenstoffhaltigen Rest mit 1 bis 20 C-Atomen bedeuten und Rₘ und Rₙ zusammen mit den sie verbindenden Atomen einen oder mehrere Ringe bilden können.

10. Verwendung mindestens eines Katalysatorsystems gemäß einem oder mehreren der Ansprüche 1 bis 6 zur Herstellung eines Polyolefins.

## Claims

1. A supported catalyst system having a high activity, obtainable by
a) bringing at least one metallocene component of the formula (I) 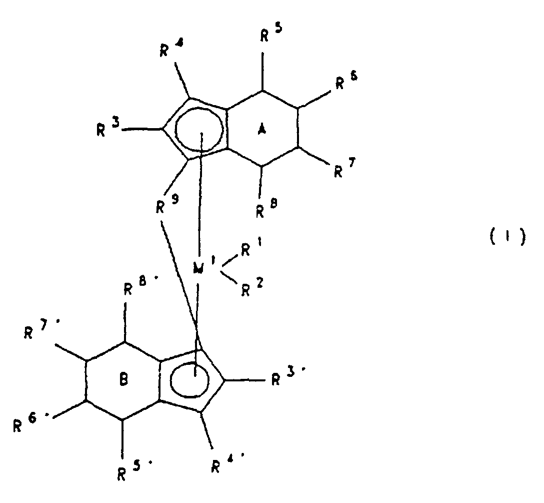 wherein
M¹ is a metal of group IVb of the Periodic Table of the Elements,
R¹ and R² are identical or different and are each a hydrogen atom, a C₁-C₁₀-alkyl group, a C₁-C₁₀-alkoxy group, a C₆-C₂₀-aryl group, a C₆-C₁₀-aryloxy group, a C₂-C₁₀-alkenyl group, an OH group, an NR¹²₂ group, where R¹² is a C₁-C₂-alkyl group or a C₆-C₁₄-aryl group, or a halogen atom,
R³ to R⁸ and R^{3'} to R^{8'} are identical or different and are each a hydrogen atom,
a C₁-C₄₀-hydrocarbon group which may be linear, cyclic or branched, e.g. a C₁-C₁₀-alkyl group, a C₂-C₁₀-alkenyl group, a C₆-C₂₀-aryl group, a C₇-C₄₀-arylalkyl group, a C₇-C₄₀-alkylaryl group or a C₈-C₄₀-arylalkenyl group, or adjacent radicals R⁴ to R⁸ and/or R^{4'} to R^{8'} together with the atoms connecting them form a ring system,
R⁹ is a bridge, preferably 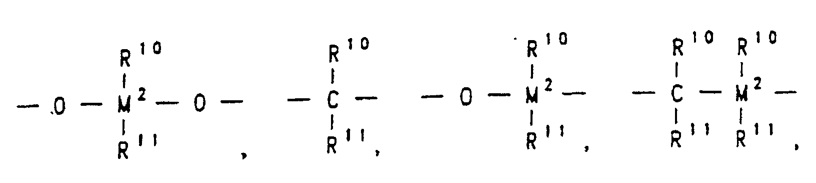 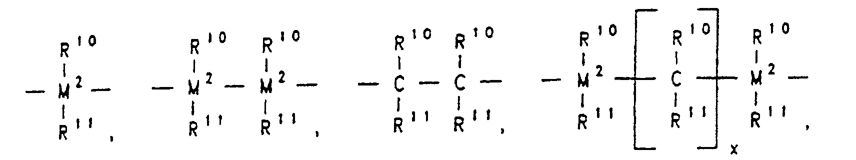 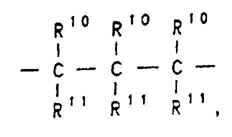 〉BR¹⁰, 〉AlR¹⁰, -Ge-, -O-, -S-, 〉SO, 〉SO₂, 〉NR¹⁰, 〉CO, 〉PR¹⁰ oder 〉R(O)R¹⁰,
where
R¹⁰ and R¹¹ are identical or different and are each a hydrogen atom, a halogen atom or a C₁-C₄₀-group, or R¹⁰ and R¹¹ together with the atoms connecting them form one or more rings, and x is an integer from zero to 18,
M² is silicon, germanium or tin and the rings A and B are identical or different, saturated or unsaturated,
R⁹ can also link two units of the formula I to one another,
and where the metallocenes of the formula I are bulky in that the indenyl or tetrahydroindenyl ligands are substituted in the 2, 2,4, 4,7, 2,6, 2,4,6, 2,5,6, 2,4,5,6 and 2,4,5,6,7 positions,
in at least one solvent into contact with at least one cocatalyst component,
b) adding the soluble product to the support material and
c) removing the solvent,
wherein the preactivation time is from 5 to 20 h.

2. A supported catalyst system as claimed in claim 1, wherein
d) the supported catalyst system is isolated and
e) prepolymerized with at least one olefinic monomer.

3. A supported catalyst system as claimed in either or both of claims 1 and 2, wherein the cocatalyst component is at least one compound selected from the group consisting of aluminoxanes or Lewis acids or ionic compounds which react with a metallocene to convert the latter into a cationic compound.

4. A supported catalyst system as claimed in one or more of claims 1 to 3, wherein the support material used is silica gel as powder.

5. A supported catalyst system as claimed in one or more of claims 1 to 4, wherein M¹ is zirconium or hafnium.

6. A supported catalyst system as claimed in one or more of claims 1 to 5, wherein R¹ and R² are identical and are methy] or chlorine, in particular chlorine, and R⁹ = M²R¹⁰R¹¹, where M² is silicon or germanium and R¹⁰ and R¹¹ are each a C₁-C₂₀-hydrocarbon group such as C₁-C₁₀-alkyl or C₆-C₁₄-aryl.

7. A process for preparing the supported catalyst system having a high activity as claimed in one or more of claims 1 to 6, which comprises
a) bringing at least one metallocene component (I) as claimed in claim 1 or 5 in at least one solvent into contact with at least one cocatalyst component,
b) adding the soluble product to the support material and
c) removing the solvent,
wherein the preactivation time is from 5 to 20 h.

8. A process for preparing a polyolefin by polymerization of one or more olefins in the presence of at least one catalyst system as claimed in one or more of claims 1 to 6.

9. The process as claimed in claim 8, wherein at least one olefin having the formula Rₘ-CH=CH-Rₙ is polymerized, where
Rₘ and Rₙ are identical or different and are each a hydrogen atom or a carbon-containing radical having from 1 to 20 carbon atoms and Rₘ and Rₙ together with the atoms connecting them can form one or more rings.

10. Use of at least one catalyst system as claimed in one or more of claims 1 to 6 for preparing a polyolefin.

## Revendications

1. Système catalyseur supporté à haute activité, que l'on peut obtenir comme suit :
a) on met en contact au moins un composant métallocènes de formule (I) 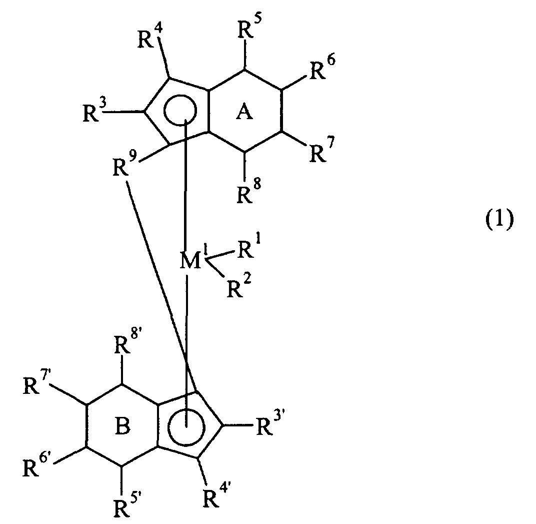 dans laquelle
M¹ est un métal du groupe IVb du Tableau Périodique des Eléments,
R¹ et R² sont identiques ou différents et représentent chacun un atome d'hydrogène, un groupe alkyle en C₁-C₁₀, un groupe alcoxy en C₁-C₁₀, un groupe aryle en C₆-C₂₀, un groupe aryloxy en C₆-C₁₀, un groupe alcényle en C₂-C₁₀, un groupe OH, un groupe NR¹²₂ où R¹² est un groupe alkyle en C₁-C₂ ou un groupe aryle en C₆-C₁₄, ou encore un atome d'halogène,
R³ à R⁸ et R³' à R⁸' sont identiques ou différents et représentent chacun un atome d'hydrogène, un groupe hydrocarboné en C₁-C₄₀ pouvant avoir une chaîne droite ou ramifiée, ou cyclique, par exemple un groupe alkyle en C₁-C₁₀, un groupe alcényle en C₂-C₁₀, un groupe aryle en C₆-C₂₀, un groupe arylalkyle en C₇-C₄₀, un groupe alkylaryle en C₇-C₄₀ ou un groupe arylalcényle en C₈-C₄₀, ou encore des radicaux voisins R⁴ à R⁸, et/ou R^{4'} à R^{8'}, forment un système cyclique avec les atomes qui les relient,
R⁹ représente un chaînons pontant, de préférence 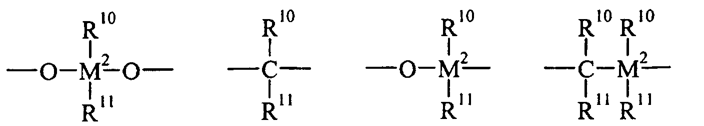 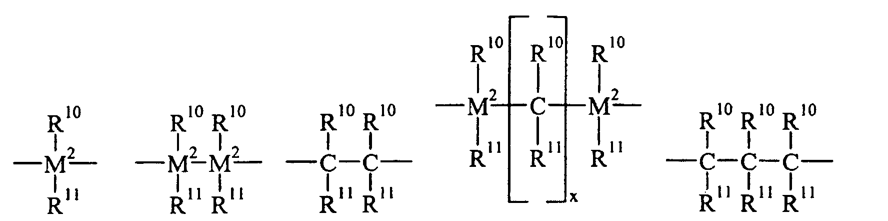 >Br¹⁰, >AlR¹⁰, -Ge-, -O-, -S-, >SO, >SO₂, >NR¹⁰, >CO, >PR¹⁰ ou >R(O)R¹⁰,
où
R¹⁰ et R" sont identiques ou différents et représentent chacun un atome. d'hydrogène, un atome d'halogène ou un groupe hydrocarboné en C₁-C₄₀, ou encore R¹⁰ et R¹¹, avec les atomes qui les relient, forment un ou plusieurs cycles, et x est un nombre entier de 0 à 18,
M² est le silicium, le germanium ou l'étain, et les noyaux A et B sont identiques ou différents, saturés ou insaturés,
R⁹ peut aussi relier l'un à l'autre deux motifs de formule I,
et où les métallocènes de formule I sont exigeants du point de vue stérique, de telle sorte que les ligands indényle ou tétrahydroindényle soient substitués sur les positions 2, 2,4, 4,7, 2,6, 2,4,6, 2,5,6, 2,4,5,6 et 2,4,5,6,7,
dans au moins un solvant, avec au moins un composant cocatalyseur,
b) on ajoute le produit soluble au matériau support,
c) on élimine le solvant,
**caractérisé en ce que** le temps de préactivation est de 5 à 20 heures.

2. Système catalyseur supporté selon la revendication 1, dans lequel
d) on isole le système catalyseur supporté, et
e) on le prépolymérise avec au moins un monomère oléfinique.

3. Système catalyseur supporté selon l'une ou plusieurs des revendications 1 à 2, dans lequel le composant cocatalyseur est au moins un composé du type d'un aluminoxane ou d'un acide de Lewis ou d'un composé ionique, qui par réaction avec un métallocène le convertit en un composé cationique.

4. Système catalyseur supporté selon l'une ou plusieurs des revendications 1 à 3, dans lequel on utilise en tant que matériau support un gel de silice sous forme de poudre.

5. Système catalyseur supporté selon l'une ou plusieurs des revendications 1 à 4, dans lequel M¹ est le zirconium ou le hafnium.

6. Système catalyseur supporté selon l'une ou plusieurs des revendications 1 à 5, dans lequel R¹ et R² sont identiques et représentent chacun le groupe méthyle ou le chlore, en particulier le chlore, et R⁹ est M²R¹⁰R¹¹, où M² est le silicium ou le germanium, et R¹⁰, ainsi que R¹¹, sont des groupes hydrocarbonés en C₁-C₂₀, tels que des groupes alkyle en C₁-C₁₀ ou aryle en C₆-C₁₄.

7. Procédé de préparation du système catalyseur supporté à haute activité selon l'une des revendications 1 à 6, dans lequel,
a) on met en contact dans au moins un solvant avec au moins un composant cocatalyseur au moins un composant métallocène (I) selon la revendication 1 ou 5,
b) on ajoute le produit soluble au matériau support,
c) on élimine le solvant,
**caractérisé en ce que** le temps de préactivation est de 5 à 20 heures.

8. Procédé de préparation d'une polyoléfine par polymérisation d'une ou plusieurs oléfines en présence d'au moins un système catalyseur selon l'une ou plusieurs des revendications 1 à 6.

9. Procédé selon la revendication 8, dans lequel au moins une oléfine de formule Rₘ-CH=CH-Rₙ est polymérisée, où Rₘ et Rₙ sont identiques ou différents et représentent chacun un atome d'halogène ou un résidu hydrocarboné ayant de 1 à 20 atomes de carbone, et Rₘ et Rₙ, avec les atomes qui les relient, peuvent former un ou plusieurs cycles.

10. Utilisation d'au moins un système catalyseur selon l'une ou plusieurs des revendications 1 à 6 pour préparer une polyoléfine.
